# EUROPEAN PATENT SPECIFICATION

(11) **EP 3 710 406 B1**
(45) Date of publication and mention of the grant of the patent: **13.11.2024**
(21) Application number: 18807235.9
(22) Date of filing: 14.11.2018
(51) Int. Cl.: C02F 1/00, C02F 1/32, B01D 24/10, C02F 103/00, C02F 103/42

(54) **FILTER APPARATUS AND METHOD**
FILTER VORRICHTUNG UND VERFAHREN
APPAREIL ET MÉTHODE DE FILTRATION

(30) Priority: 15.11.2017 GB 201718912
(43) Date of publication of application: 23.09.2020
(73) Proprietor: Evolution Aqua Limited, Wigan, Lancashire WN5 0LP (GB)
(72) Inventor: JACKSON, Nicholas John, Wigan Lancashire L405UD (GB); KUIJPER, Jasper Hendricus Maria, Burscough Lancashire L40 4AL (GB)
(74) Representative: Thompson, Trevor George
(86) International application number: PCT/EP2018/081193
(87) International publication number: WO 2019/096826

(56) References cited:
- WO-A1-2016/185159
- US-A- 5 951 876
- US-A1- 2009 178 980
- US-A1- 2013 118 992

## Description

### TECHNICAL FIELD

The present disclosure relates to a filter apparatus and method. More particularly, but not exclusively, the present disclosure relates to filter apparatus for performing mechanical filtration of a liquid, and a related method. The filter apparatus and method may be suitable for filtering water in swimming pools. Alternatively, or in addition, the filter apparatus may be suitable for filtering water in swimming baths, leisure pools, hot tubs, spas and leisure parks.

### BACKGROUND

It is known to provide a filter apparatus for filtering a liquid, such as water, to remove debris and contaminants. A filter media, such as sand, may be provided in a filter chamber. In order to suppress or inhibit biological activity, it is known to expose the filter liquid to ultraviolet light. However, this approach is not suitable for suppressing or inhibiting biological activity within the filter media.

US 2013/118992 discloses a water treatment system comprising a filtration compartment, a transfer compartment and a purification compartment. Untreated water is contained in the filtration compartment as well as filtration media. An ultra-violet (UV) lamp is provided in the purification compartment. The transfer compartment 30 is separated from the purification compartment by a wall having a reflective coating to reflect UV light from the UV lamp.

US 5,951,876 discloses a fluid treatment apparatus comprising first and second titanium mesh filters disposed in respective first and second chambers. A pair of elongate ultra-violet lamps extend along the upper and lower portions of each of the first and second chambers. A series of valves is provided to enable the direction of flow through the filters to be reversed to perform backwashing of each filter in succession whilst fluid flowing along the passage is filtered by the other filter.

US 2009/178980 A1 discloses a moving bed media filter having a plurality of UV light sources. The filter comprises a vessel including a filter chamber containing a media bed having an upper surface. A recirculation (airlift) tube supplies compressed air to the vessel to carry media, contaminants and/or solids upwardly within a recirculation tube.

WO 2016/185159 A1 discloses filter elements having an open cell structure.

At least in certain embodiments, the filter apparatus described herein seeks to overcome at least some of the problems associated with the prior art.

### SUMMARY OF THE INVENTION

The present invention relates to a filter apparatus and to a method as claimed in the appended claims.

According to ef the present invention there is provided a filter apparatus for mechanically filtering a liquid, the filter apparatus comprising:
a filter chamber containing a plurality of filter elements for filtering the liquid, the filter elements each having an open cell structure; and
a steriliser unit disposed inside the filter chamber for sterilising the filter elements in the filter chamber;
wherein, in use, the liquid flows through the filter chamber and causes the filter elements to form a filter pack in the filter chamber, the steriliser unit being located inside the filter chamber such that the filter elements form the filter pack around at least a portion of the steriliser unit, the steriliser unit being configured to extend at least partially into the filter pack formed in the filter chamber.

At least in certain embodiments, the steriliser unit may disinfect the filter elements. The steriliser unit may suppress or inhibit biological activity. At least in certain embodiments, the steriliser unit may kill or render inactive micro-organisms. The micro-organisms may include one or more of the following set: germs, bacteria, protozoa, alveolates, helminths, fungi and viruses. At least in certain embodiments, the micro-organisms may include parasitic alveolates, notably apicomplexan parasitic alveolates, such as Cryptosporidium. The filter apparatus may kill the micro-organisms at various stages in their life cycle, for example when they are cysts.

The filter apparatus may be configured to sterilise the filter elements in the filter chamber during filtration of the liquid. The liquid flows through the filter chamber and causes the filter elements to form a filter pack. The steriliser unit may sterilise the filter elements while they are in this filter pack. The steriliser unit is configured to extend at least partially into the filter pack formed in the filter chamber. The steriliser unit is located inside the filter chamber such that, in use, the filter elements form the filter pack around at least a portion of the steriliser unit.

Alternatively, or in addition, the filter apparatus may be configured to sterilise the filter elements in the filter chamber during a backwashing operation.

The filter apparatus may be suitable for filtering water in one or more of the following set: swimming pools, swimming baths, leisure pools, hot tubs, spas and leisure parks.

The steriliser unit is disposed inside the filter chamber. The filter apparatus may be configured such that, in use, the steriliser unit is at least partially surrounded by the filter elements in the filter chamber.

In use, the filter elements form a filter pack in the filter chamber. The steriliser unit is disposed proximal to a region where the filter pack forms. This may be advantageous since the steriliser unit may treat the filter elements while they are in the filter pack. The filter pack may be stationary and exposure of the filter elements to the steriliser unit may increase.

The filter chamber may comprise a liquid inlet and a liquid outlet. The steriliser unit may be disposed proximal to the liquid outlet.

The flow of liquid through the filter chamber may be an up flow, typically resulting in a filter pack forming in an upper region of the filter chamber. The steriliser unit may be disposed proximal to the upper region of the filter chamber.

The flow of liquid through the filter chamber may be a down flow, typically resulting in a filter pack forming in a lower region of the filter chamber. The steriliser unit may be disposed proximal to the lower region of the filter chamber.

The steriliser unit may comprise at least one light source for emitting UV light. The steriliser unit may be configured to perform ultraviolet germicidal irradiation. The steriliser unit may be configured, in use, to transmit UV light through a filter pack formed by the filter elements in the filter chamber.

The at least one light source may be configured predominantly to emit light having a wavelength of between 100nm and 280nm inclusive.

The filter apparatus may comprise means for reflecting light emitted from the at least one light source into the filter chamber. A reflective layer, for example comprising a reflective foil surface, may be provided. If the filter chamber is formed by a transparent sidewall, the reflective layer may be disposed around the outside of the sidewall. If the filter chamber is formed by an opaque sidewall, the reflective layer may be disposed on an inner surface of the sidewall.

The filter elements have an open cell structure. In use, the open cell structure may facilitate the transmission of the light through the filter pack. The filter elements may each comprise one or more filter cells. The filter elements may comprise a tubular element having one or more filter cells formed therein. The filter elements may comprise a planar element, such as a disc- or polygon-shaped element, having a plurality of filter cells formed therein.

Alternatively, or in addition, the filter elements may be at least partially UV transparent.

The filter elements may be at least partially UV transparent to facilitate the transmission of light emitted from the at least one light source through the filter pack.

The one or more filter cell may have a length greater than or equal to 3mm, 4mm, 5mm, 6mm, 7mm or 8mm. The one or more filter cell can have a length which is less than or equal to 8mm, 10mm, 12mm, 14mm or 16mm. The length of the one or more filter cell can be approximately 7mm, 8mm, 9mm, 10mm, 11mm or 12mm. The one or more filter cell may have a length in the range 3mm to 12.6mm, inclusive. In certain embodiments, the one or more filter cell may have a length of 8.95mm and a diameter in the range 10mm to 11.5mm. The length of the one or more filter cell may correspond to a length of the mechanical filter element along its longitudinal axis.

The one or more filter cell can each have a cross-sectional area less than or equal to 10mm², 8mm², 5mm², or 3mm². The cross-sectional area of said one or more filter cell is measured in a reference plane disposed perpendicular to a longitudinal axis of the mechanical filter element. The one or more filter cell can have a cross-sectional area greater than or equal to 1mm², 3mm² or 5mm². The one or more filter cell can have at least substantially the same cross-sectional area. The one or more filter cell can have a cross-sectional area in the range of 2.8mm² to 2.9mm².

Alternatively, or in addition, the filter elements may be formed from a UV transparent (or semi-transparent) material. The filter elements may be formed from a material which is transparent (or semi-transparent) to UV light having a wavelength corresponding to the wavelength of the UV light output by the light source. The filter elements could be formed of glass, for example. However, it is envisaged that the filter elements would be moulded from a plastics material, for example using an extrusion process.

The filter apparatus may comprise means for introducing air into the filter chamber through one or more air inlets to agitate the filter elements.

The filter chamber may be at least substantially sealed. The air introducing means may be configured to draw air into the filter chamber as liquid is drained from said filter chamber. The means for introducing air into the filter chamber may comprise an air supply conduit having at least one air inlet for introducing air into the filter chamber.

A control unit may be provided for controlling activation of the steriliser unit. The control unit may be configured to control activation of a pump for suppling liquid to the filter chamber.

The control unit may be configured to activate the steriliser unit when the pump is operating.

According to a further aspect of the present invention there is provided a method of filtering a liquid, the method comprising:
establishing a flow of liquid through a filter pack formed of a plurality of filter elements in a filter chamber, the filter elements each having an open cell structure, the flow of liquid through the filter chamber causing the filter elements to form the filter pack in the filter chamber, and
sterilising the filter elements in the filter chamber while the liquid flows through the filter pack,
wherein the method comprises activating a steriliser unit to sterilise the filter elements in the filter chamber, the steriliser unit being located inside the filter chamber such that the filter elements form the filter pack around at least a portion of the steriliser unit, the steriliser unit being configured to extend at least partially into the filter pack formed in the filter chamber.

The method may comprise sterilising the filter elements in the filter chamber during a backwashing operation to clean the filter elements.

Sterilising the filter elements may comprise emitting light which is incident on the filter elements in the filter chamber. The light may be emitted by a light source disposed inside the filter chamber.

Sterilising the filter elements may comprise emitting ultraviolet (UV). The light emitted into the filter chamber may have a wavelength of between 100nm and 280nm inclusive.

The method may comprise sterilising the filter elements forming the filter pack. The filter chamber may comprise a liquid inlet and a liquid outlet. The steriliser unit may be disposed proximal to the liquid outlet.

The method may comprise activating a steriliser unit to sterilise the filter elements in the filter chamber.

The steriliser unit is disposed inside the filter chamber.

The flow of liquid through the filter chamber may be performed concurrent with sterilisation of the filter elements and/or the liquid.

The term "sterilising" and the derivatives thereof are used herein to refer to any process which kills or renders inactive micro-organisms. The term "disinfect" could also be used to describe this process.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

Unless indicated to the contrary, references herein to a cross-section of the filter chamber refer to a transverse cross-section extending perpendicular to a longitudinal axis of the filter chamber. At least in certain embodiments, the filter chamber may have cylindrical symmetry about said longitudinal axis. The longitudinal axis is typically arranged substantially vertically, but other arrangements may also be useful.

### BRIEF DESCRIPTION OF THE DRAWINGS

One or more embodiments of the present invention will now be described, by way of example only, with reference to the accompanying figures, in which:
Figure 1 shows a schematic representation of a filter system incorporating a filter apparatus in accordance with an embodiment of the present invention;
Figure 2 is a photograph of the filter apparatus shown in Figure 1;
Figure 3 is an exploded view of the filter apparatus shown in Figure 2;
Figure 4 is an enlarged view of the filter pack formed by the filter elements in the filter apparatus when the steriliser unit is active;
Figure 5 shows a perspective view of a filter element for use in conjunction with the filter apparatus described herein;
Figures 6A-C are schematic representations of the filter apparatus in accordance with the present embodiment performing filtration and backwashing;
Figure 7 is a photograph of a filter apparatus in accordance with a further embodiment of the present invention;
Figure 8 is an exploded view of the filter apparatus shown in Figure 7; and
Figure 9 is a schematic representation of a filter system comprising a plurality of filter units in accordance with an embodiment of the present invention.

### DETAILED DESCRIPTION

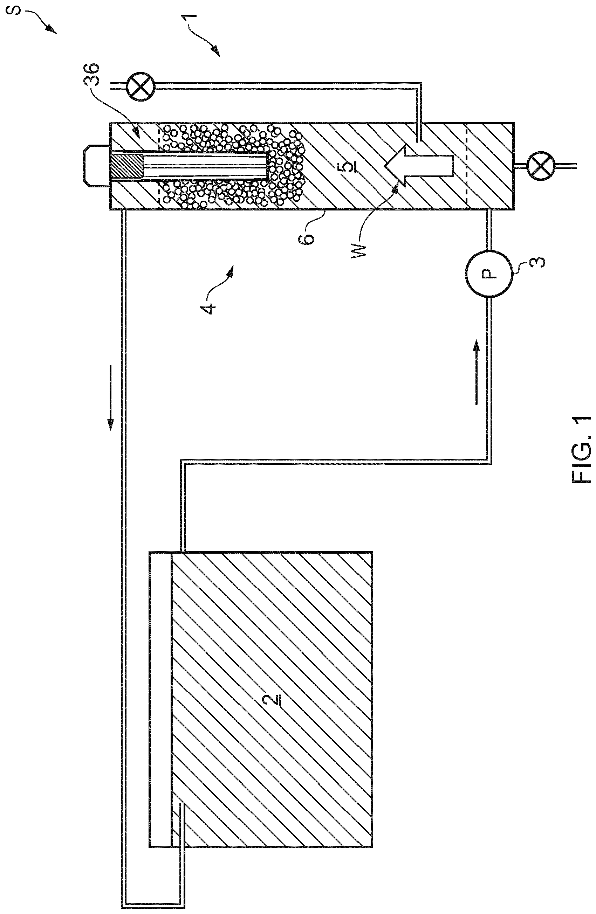

A filter system S incorporating a filter apparatus 1 in accordance with an embodiment of the present invention will now be described with reference to Figures 1 to 6. The filter apparatus 1 is operable to perform mechanical filtration of a liquid, typically water W. The water W is illustrated in the accompanying figures by hatching.

In the filter system S shown schematically in Figure 1, the filter apparatus 1 is configured to perform mechanical filtration of the water W in a swimming pool 2. The swimming pool 2 may, for example, be an above ground swimming pool 2. It will be understood that the filter system S may be used in other applications, for example in an aquatics system. A pump 3 is provided for pumping unfiltered water W from the swimming pool 2 to the filter apparatus 1. The pump 3 is operable to pump unfiltered water W from the swimming pool 2 to the filter apparatus 1. The water W is mechanically filtered, and the filtered water W returned to the swimming pool 2. The pump 3 is a fixed speed pump in the present embodiment, but alternative embodiments may use a variable speed pump. The pump 3 may be incorporated into the filter apparatus 1.

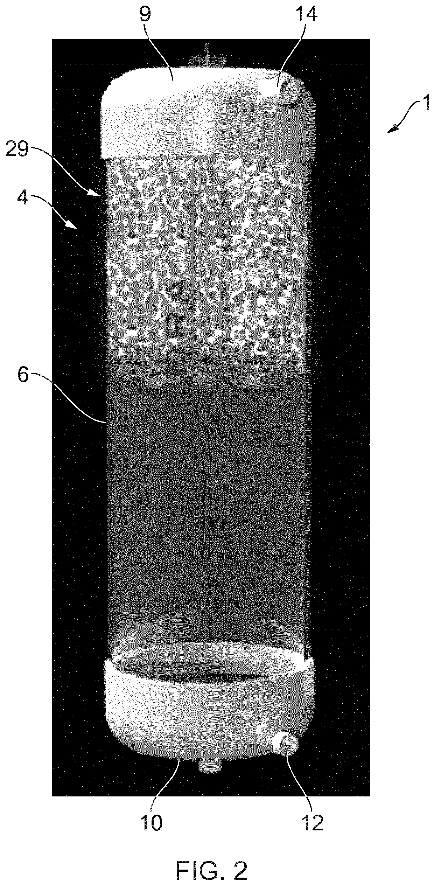

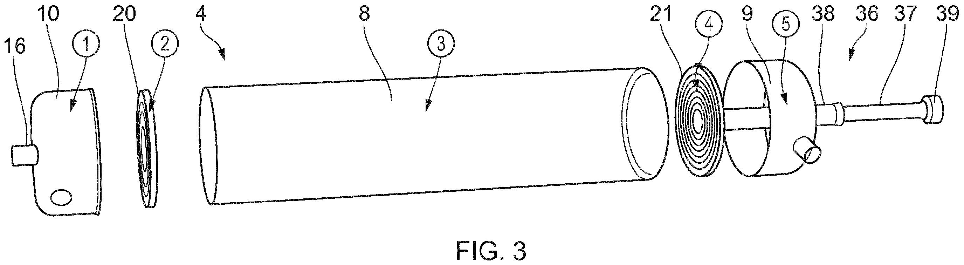

As shown in Figures 1 and 2, the filter apparatus 1 comprises a filter housing 4 which defines a filter chamber 5 having a sidewall 6. The filter chamber 5 in the present embodiment is a sealed chamber. A plurality of filter elements 7 are disposed in the filter chamber 5 and collectively form a mechanical filter. As described herein, the filter apparatus 1 is operable to filter the water W. The filter housing 4 comprises a tubular member 8 having a central longitudinal axis X-X arranged substantially vertically. The tubular member 8 defines the sidewall 6 of the filter chamber 5. In the present embodiment, the filter apparatus 1 has a diameter of 400mm (approximately 16") and a height of 1500mm (approximately 59"). The filter apparatus 1 is configured to process a flow of between 10m³/hour and 16m³/hour. An exploded view of the filter apparatus 1 is shown in Figure 3. The upper and lower ends of the tubular member 8 are sealed by an upper closure member 9 and a lower closure member 10 respectively to close the filter chamber 5. A lower mesh 20 and an upper mesh 21 are provided to retain the filter elements 7 in the filter chamber 5. The tubular member 8 has a substantially uniform cross-section along the central longitudinal axis X-X. Thus, the filter chamber 5 in the present embodiment has a substantially constant profile along the central longitudinal axis X-X. In the present embodiment, the tubular member 8 is in the form of a cylinder having a circular cross-section (i.e. a right circular cylinder). The filter chamber 5 may have different cross-sections, for example elliptical, rectangular or square. The tubular member 8 is illustrated as being transparent in the present embodiment. It will be understood that the tubular member 8 may be opaque.

As shown in Figure 1, the filter system S comprises a liquid supply conduit 11 for supplying unfiltered water from the swimming pool 2 to a liquid inlet 12 formed in the filter chamber 5.

The filter system S also comprises a liquid return conduit 13 for returning filtered water from a liquid outlet 14 formed in the filter chamber 5 to the swimming pool 2. The liquid inlet 12 is formed in the lower closure member 10 and the liquid outlet 14 is formed in the upper closure member 9. During filtration, there is an up flow of water W through the filter chamber 5. The unfiltered water W is introduced through the liquid inlet 12 at the bottom of the filter chamber 5; and the filtered water W exits through the liquid outlet 14 at the top of the filter chamber 5. The filter chamber 5 is sealed and the operating pressure is greater than atmospheric pressure when the pump 3 supplies unfiltered water W to the filter chamber 5.

The filter apparatus 1 also comprises a drain conduit 16 for draining water from the filter chamber 5. The drain conduit 16 may, for example, be connected to waste or to a sump for collecting waste water. A drain valve 18 is provided for selectively opening and closing the drain conduit 16. The drain valve 18 in the present embodiment is manually operated, for example by operating a control lever. In a variant, the drain valve 18 may be actuated by a drain valve actuator, for example a first electromechanical actuator, such as a solenoid.

The filter apparatus 1 comprises means for introducing air into the filter chamber 5. The air introduction means (denoted generally by the reference numeral 22) comprises an air supply conduit 23 and a check valve 24. The air supply conduit 23 is connected to one or more air inlets 25 for introducing air into the filter chamber 5. As described herein, the air supply conduit 23 is configured to enable air to be drawn into the filter chamber 5 through the air inlets 25 by the reduced pressure in the filter chamber 5 caused by the water W draining from the filter chamber 5. The air supply conduit 23 extends vertically and has an air intake 27. In the present embodiment the check valve 24 is disposed at or proximal to the air intake 27. The air inlets 25 may be formed in one or more distribution conduits (not shown) disposed at the base of the filter chamber 5, for example extending radially outwardly from a central manifold. The check valve 24 enables one-way flow through the air supply conduit 23. In particular, the check valve 24 is configured to allow air to enter the air supply conduit 23 and to prevent water exiting through the air supply conduit 23. The check valve 24 may, for example, comprise a spring-biased closure member or a closure flap (not shown) configured to open to allow air to be drawn into the air supply conduit 23 and to close to prevent water W exiting through the air supply conduit 23. The check valve 24 may, for example, comprise a ball for locating in a valve seat to seal the air supply conduit 23. In an alternative embodiment, the check valve 24 may be replaced with a valve member which may be selectively opened and closed. In alternative embodiments, the check valve 24 may comprise an electromechanical actuator, such as a solenoid, for opening and closing the air supply conduit 23.

As outlined above, a plurality of filter elements 7 are disposed in the filter chamber 5. When the water W is introduced into the filter chamber 5, the filter elements 7 form a filter pack 29. In the present embodiment, the filter elements 7 have substantially neutral buoyancy and, due to the upwards flow of the water W through the filter chamber 5, the filter pack 29 forms at the top of the filter chamber 5, as illustrated in Figures 2. The filter elements 7 disposed in the filter chamber 5 may have a neutral buoyancy or a positive buoyancy in water. The flow of water W through the filter chamber 5 compacts the filter elements 7 together at the top of the filter chamber 5 and forms the filter pack 29; the movement of the filter elements 7 within the filter pack 29 is restricted. The resulting filter pack 29 is substantially static and is suitable for performing mechanical filtration of the water W. In the present embodiment, the filter pack 29 has a depth of approximately 400mm (approximately 16").

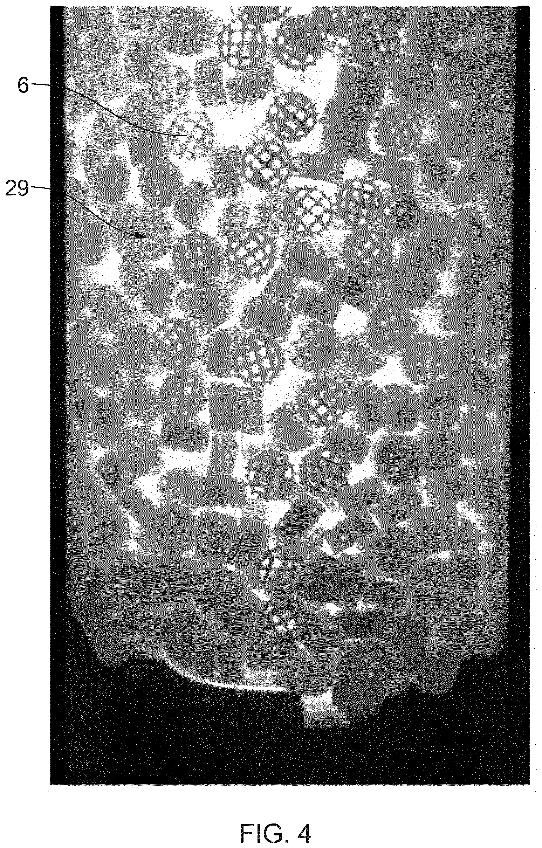

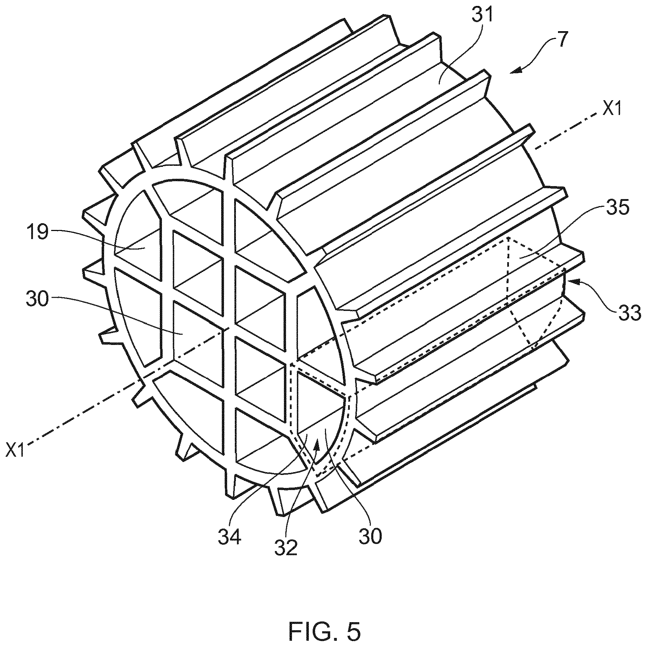

As shown in Figure 5, the filter elements 7 have an open cell structure. In particular, the filter elements 7 each comprise one or more filter cells 30. The filter elements 7 comprise a cylindrical wall 31 which is open at each end. The cylindrical wall 30 has a central longitudinal axis X-X and a substantially circular profile. The filter elements 7 each comprise a plurality of filter cells 30. The filter cells 30 are open cells for trapping particulates and other debris suspended in the unfiltered water W to perform mechanical filtration. The filter cells 30 are elongated and in the present embodiment form conduits extending along the length of the filter element 7. As shown in Figure 4 the filter cells 30 each have a first end 32 and a second end 33. A first cell opening 34 is formed at said first end 32 and a second cell opening 35 is formed at said second end 33. Thus, the first and second ends of each filter cell 30 are both open. In a variant, the filter cells 30 could be open at the first end 32 and closed at the second end 33. In a further variant, the first and second ends 32, 33 of the conduit could both be open, but an intermediate closure wall could be disposed between the first and second ends 32, 33 to form separate filter cells 30 separated from each other by the intermediate closure wall. The term "open cell filter element" is used herein to define the filter element 7. Further details of filter elements 7 suitable for use in the filter apparatus 1 are disclosed in the Applicant's International patent application number PCT/GB2016/000101 filed on 16 May 2016.

It will be understood that other types of filter element 7 may be used in the filter apparatus 1 described herein.

The filter apparatus 1 in the present embodiment comprises a steriliser unit 36 which is activated during filtration of the water W. The steriliser unit 36 comprises a light source 37, a shield member 38 and an electrical connector 39. The light source 37 is disposed inside the shield member 38. The light source 37 comprises at least one UV lamp configured to emit UV light for sterilising the filter elements 7. The shield member 38 is formed of quartz to enable transmission of the UV light emitted from the light source 37. In the present embodiment, the steriliser unit 36 comprises two (2) tubes arranged alongside each other to form a UV lamp. The UV lamp in the present embodiment has a power rating of 36 Watts. The light source 37 may comprise a single lamp or more than two (2) lamps. The steriliser unit 36 could comprise more than one light source 37. The light source 37 is configured to emit electromagnetic radiation in the ultraviolet (UV) range (i.e. electromagnetic radiation having a wavelength in the range 10nm to 400nm). In use, the UV light emitted by the light source 37 has germicidal properties and is effective in killing or rendering inactivate microorganisms, such as bacteria, germs, protozoa, helminths, fungi and viruses. Thus, at least in certain embodiments, the light source 37 may be germicidal. In certain embodiments, the emitted light may be short-wavelength ultraviolet (referred to as Ultraviolet C or UVC) having a wavelength in the range 100nm to 280nm. The ultraviolet light emitted by the light source 37 is effective in reducing or eliminating biological activity in the water W and/or in the filter elements 7. An enlarged view of the filter pack 29 is shown in Figure 4 when the light source 37 is activated in accordance with an aspect of the present invention.

As shown in Figures 2 and 3, the steriliser unit 36 in the present embodiment is provided inside the filter chamber 5 and is operable to emit UV light directly into the water W and directly into the filter elements 7. The light source 37 is disposed centrally within the filter chamber 5 and extends along the longitudinal axis X-X in the present embodiment. The steriliser unit 36 is disposed within the filter chamber 5 proximal to or coincident with the region where the filter elements 7 congregate during filtration. The steriliser unit 36 may, for example, be disposed proximal to the liquid outlet 14. In the present embodiment, the steriliser unit 36 is disposed in an upper portion of the filter chamber 5. As described herein, the filter apparatus 1 in the present embodiment is configured to generate an up flow of water W which displaces the filter elements 7 into the upper portion of the filter chamber 5. Thus, in use, the filter pack 29 is formed within the filter chamber 5 proximal to the light source 37. A steriliser unit 36 could be provided at the bottom of the filter chamber 5. The steriliser unit 36 could be activated when the filter chamber 5 is drained and the filter elements 7 collect at the bottom of the filter chamber 5. Alternatively, if the filter apparatus 1 was configured to establish a down flow of the water W through the filter chamber 5, the steriliser unit 36 could be provided at the bottom of the filter chamber 5 to emit UV light during filtration. In a further variant, the steriliser unit 36 could extend long the length of the filter chamber 5.

The filter elements 7 disposed in the filter chamber 5 have an open cell structure which, in use, facilitates the transmission of the light emitted by the light source 37 through the filter pack 29. The light may, for example, be transmitted through the open cells of the filter elements 7. In certain embodiments, at least some of the light emitted by the light source 37 is transmitted at least partially through the filter pack 29. At least some of the light emitted by the light source 37 may be reflected off the surface of the filter elements 7 promoting scattering of the light within the filter pack 29. This may help to increase exposure of micro-organisms present on the filter elements 7 (both on external surfaces thereof and also on interior surfaces within the open cells) to the UV light emitted by the at least one light source 37.

The provision of ribs on the outside of the filter elements 7 may help to maintain paths for transmission of the UV light between filter elements 7 disposed adjacent to each other within the filter pack 29. The central location of the light source 37 within the filter chamber 5 helps to promote penetration of the UV light into the filter pack 29. As shown in Figure 4, the filter pack 29 is at least partially illuminated by the light source 37 when the steriliser unit 36 is activated. A reflective layer may optionally be provided around the tubular member 8 to reflect light back into the filter pack 29.

The filter elements 7 could be formed from a plastics material which is transparent or semi-transparent to UV light. At least some of the UV light emitted by the light source 37 may be transmitted through the filter elements 7 within the filter pack 29. The filter elements 7 may be formed from a plastics material which is transparent (or semi-transparent) to UV light having a wavelength corresponding to the wavelength of the UV light output by the light source 37. For example, the plastics material may permit transmission of UV light having a wavelength less than 290nm. The filter elements 7 may, for example, be formed from UV transmitting acrylic, cyclic olefin copolymer (COC), or other plastics polymer.

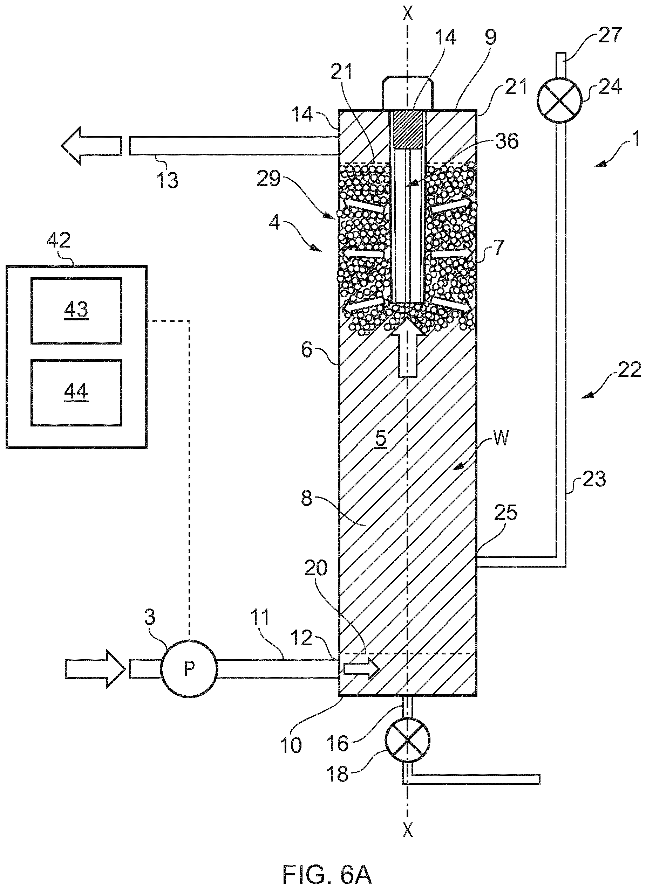

As shown schematically in Figure 6A, the filter apparatus 1 comprises an electronic control unit (ECU) 42 for controlling operation of the pump 3 and the steriliser unit 36. The ECU 42 comprises a processor 43 and a memory 44. The processor 43 is configured to activate the pump 3 to pump the water W through the filter chamber 5; and to activate the steriliser unit 36. As described herein, the steriliser unit 36 is activated by energizing the light source 37 to emit UV light while the water W is pumped through the filter pack 29. Thus, mechanical and biological filtration may be performed simultaneously.

The operation of the filter apparatus 1 will now be described with reference to Figures 6A-C. The filter apparatus 1 is illustrated in Figure 6A filtering the water W from the swimming pool 2. To perform filtration, the ECU 42 activates the pump 3 to supply unfiltered water W from the swimming pool 2 to the filter chamber 5. The ECU 42 may also control a drain valve actuator 19 to close the drain valve 18. Alternatively, or in addition, the ECU 42 may check that the drain valve 18 is closed prior to activating the pump 3. The pump 3 supplies unfiltered water W into the filter chamber 5 and establishes an up flow of water W through the filter pack 29. The unfiltered water W is mechanically filtered as it passes through the filter pack 29 and filtered water W exits the filter chamber 5 through the liquid outlet 14. The filter elements 7 perform mechanical filtration by trapping particulates and other material suspended in the water W. The filtered water W is returned to the swimming pool 2 through the liquid return conduit 13. The material filtered from the water W may be held between the filter elements 7 forming the filter pack 29, or within the open filter cells 30 of each filter element 7 and within the filter channels formed by the external ribs. The upper mesh 21 prevents the filter elements 7 entering the liquid return conduit 13.

The steriliser unit 36 is activated at the same time as the pump 3. The light source 37 is energized and UV light is emitted directly into the filter pack 29, as illustrated in Figure 6A. The UV light has germicidal properties and is effective in sterilising the filter elements 7. The UV light is effective in reducing or eliminating micro-organisms on the filter elements 7. The micro-organisms may, for example, include germs, bacteria, protozoa, alveolates, helminths, fungi and viruses. At least in certain embodiments, the micro-organisms may include apicomplexan parasitic alveolates, such as Cryptosporidium. The UV light may also help to reduce or eliminate micro-organisms in the water W pumped through the filter chamber 5. Thus, at least in certain embodiments, the steriliser unit 36 may sterilise both the water W and the filter elements 7.

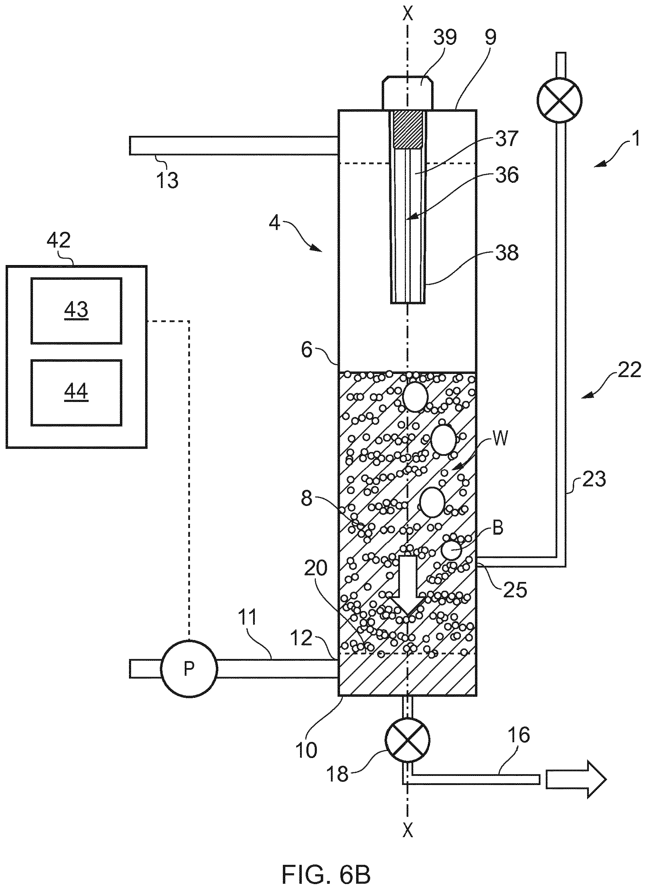

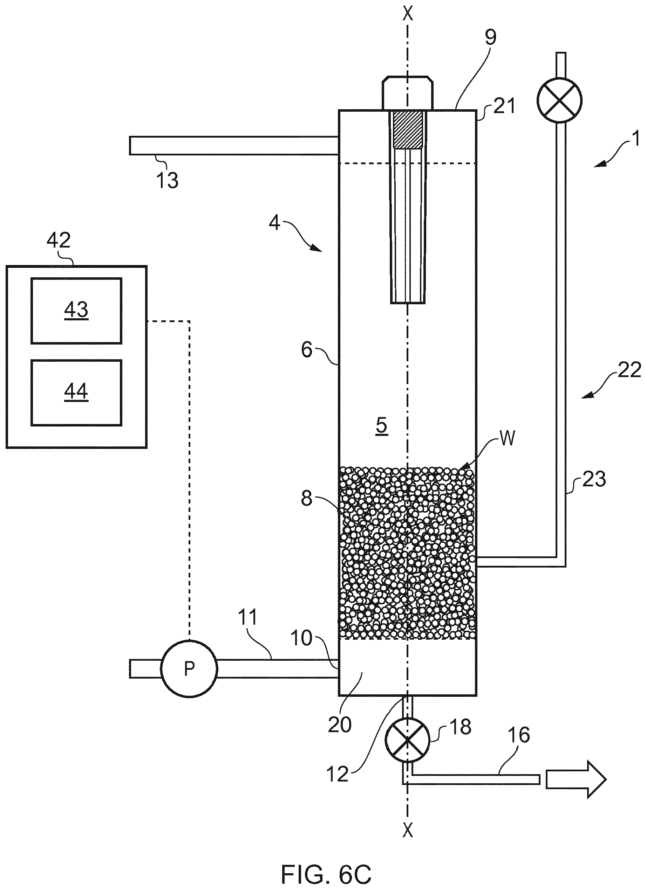

As shown in Figures 6B and 6C, the filter apparatus 1 is periodically purged to expel filtered material to waste. To perform backwashing, the pump 3 is deactivated and the drain valve 18 opened. The steriliser unit 36 may optionally be deactivated in conjunction with the pump 3 being switched off, for example to help reduce power consumption. As illustrated in Figure 6B, the water W flowing out of the sealed filter chamber 5 causes a drop in operating pressure within the filter chamber 5 to less than atmospheric pressure. The reduced pressure in the filter chamber 5 causes the check valve 24 to open and draws air into the filter chamber 5 through the air inlets 25 via the air supply conduit 23. The air entering the filter chamber 5 forms a plurality of bubbles B which rise to the top of the water W in the filter chamber 5. The air bubbles B rise through the water W and agitate the filter elements 7, helping to break up the filter pack 29. As shown schematically in Figure 3B, air continues to be drawn into the filter chamber 5 as the water W flows through the drain conduit 16. The continuous agitation of the filter elements 7 during backwashing helps to dislodge filtered material, for example displacing particulates trapped in the filter cells 30 and in the filter channels between the external ribs. It will be appreciated that the water W in the filter chamber 5 continues to drain through the drain conduit 16, such that the level of the water W continues to drop, drawing more air through the air supply conduit 23 and causing further agitation of the filter elements 7 within the filter chamber 5. By agitating the filter elements 7, material and debris filtered by the filter elements 7 is dislodged and returned to the water W within the filter chamber 5. In certain embodiments, the pump 3 may continue to supply water to the filter chamber 5 during backwashing.

The introduction of air into the filter chamber 5 continues concurrently with drainage of the water W from the filter chamber 5. By draining the water W through the drain conduit 16, the material and debris is expelled from the filter chamber 5. The filter elements 7 may thereby be cleaned ready to perform filtration. The agitation of the filter elements 7 continues until the water level in the filter chamber 5 drops below the height of the air inlets 25 or the filter chamber 5 is empty. The level of the water W drops below the height of the air inlets 25 and air is drawn freely into the filter chamber 5. The pressure in the filter chamber 5 returns to atmospheric pressure and the check valve 24 closes. As shown schematically in Figure 3C, when the filter chamber 5 is completely drained, the filter elements 7 settle at the bottom of the filter chamber 5. The lower mesh 20 prevents the filter elements 7 entering the drain conduit 16.

Once the water W has drained to waste and the filter chamber 5 is empty, the drain valve 18 is operated to close the drain conduit 16 and the pump 3 is re-started. The pump 3 supplies unfiltered water W such that the filter chamber 5 is partially or completely re-filled with unfiltered water W. The drain valve 18 may be held open such that additional washing of the filter elements 7 may be performed and the water supplied by the pump 3 flushed directly to waste through the drain conduit 16. The inlet for the liquid supply conduit 11 could extend upwardly into the filter chamber 5 to promote washing of the filter elements 7. In alternative arrangements, the drain valve 18 may be closed before or concurrent with opening of the liquid return conduit 13. The backwashing may optionally be performed more than once. For example, the filter chamber 5 may be partially or completely re-filled, the liquid return conduit 13 closed and the drain valve 18 re-opened. The backwashing of the filter elements 7 is the same as described above, as air is drawn into the filter chamber 5 to form bubbles B which agitate the filter elements 7.

The pump 3 is re-started to pump water from the swimming pool 2 into the filter chamber 5. The drain valve 18 is operated to close the drain conduit 16 and the filter chamber 5 is refilled with unfiltered water W. The filter elements 7 re-form the filter pack 29 and are operative to perform mechanical filtration of the water W since it flows upwardly through the filter chamber 5. The steriliser unit 36 is activated and the light source 37 illuminated. The filtered water W is returned to the swimming pool 2 through the liquid return conduit 13.

The filter apparatus 1 described herein incorporates a sealed filter chamber 5 capable of supporting an operating pressure greater than atmospheric pressure. It will be understood that the filter apparatus 1 may be modified such that the operating pressure in the filter chamber 5 is less than atmospheric pressure. In particular, the filter apparatus 1 may be reconfigured such that the filter chamber 5 is on the suction side of the pump 3. For example, the pump 3 may be disposed in the liquid return conduit 13. The other connections to the filter chamber 5, including the air introducing means 22, may remain unchanged in this arrangement.

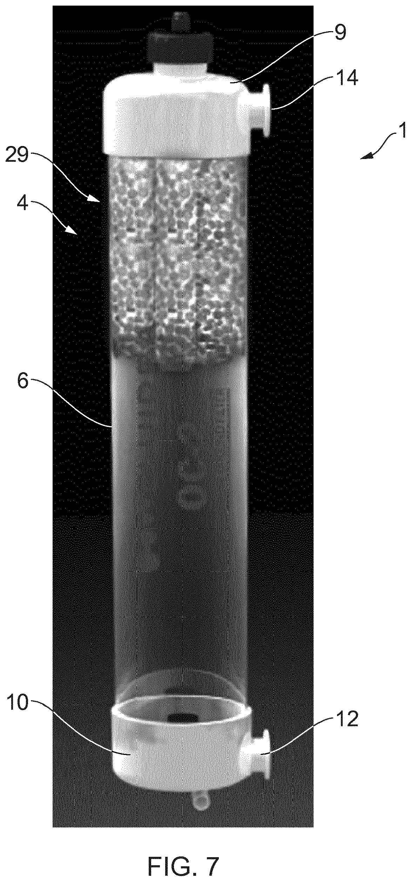

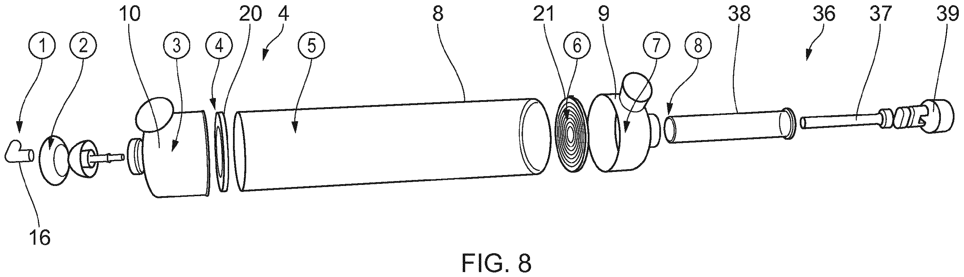

A variant of the filter apparatus 1 is shown in Figures 7 and 8. The filter apparatus 1 in this variant has a diameter of 300mm (approximately 12") and a height of approximately 1500mm (approximately 59"). The filter elements 7 are provided in the filter chamber 5 to form a filter pack 29 having a depth of approximately 400mm (approximately 16"). The light source 37 has a power rating of 36 Watts. The filter apparatus 1 according to this arrangement has a flow of between 5m³/hour and 10m³/hour.

To facilitate installation of the filter apparatus 1 described herein, the filter chamber 5 may be pre-charged at the assembly stage with an appropriate volume of the filter elements 7. Thus, the filter elements 7 may be introduced into the filter apparatus 1 during assembly. The filter apparatus 1 may be shipped with the filter elements 7 in situ.

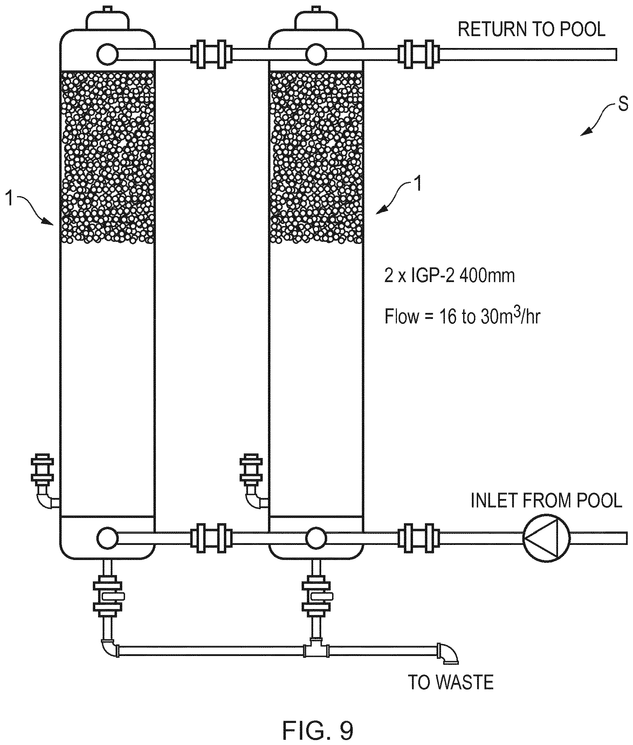

It will be understood that more than one of the filter apparatus 1 described herein may be arranged in series or in parallel to perform filtration. An array comprising a plurality of the filter apparatus 1 may be assembled depending on the volume of liquid to be filtered. In certain embodiments, the filter apparatus 1 may have a modular configuration to facilitate assembly of the array. A schematic representation of a filtration system S comprising a first filter apparatus 1 and a second filter apparatus 1 arranged in parallel is shown in Figure 9. The first and second filter apparatuses 1 are of the type described herein with reference to Figures 1 to 6. The parallel connection provides a combined flow of 16m³/hour to 30m³/hour. It will be understood that more than two of the filter apparatus 1 in accordance with the present invention may be combined to provide increased capacity.

The steriliser unit 36 has been described herein as being disposed inside the filter chamber 5. In a variant, not according to the invention, the steriliser unit 36 could be provided outside the filter chamber 5. For example, the steriliser unit 36 could be configured to emit ultra violet light into the filter chamber 5, for example through a transparent or semi-transparent section of the sidewall 6. The steriliser unit 36 could, for example, have an annular form for emitting light radially inwardly into the filter chamber 5.

The filter apparatus 1 described herein establishes an up flow of the water W through the filter chamber 5. It will be understood that the filter apparatus 1 may be modified to establish a down flow of the water W through the filter chamber 5. In this arrangement, the steriliser unit 36 may be disposed at the bottom of the filter chamber 5. The filter apparatus 1 may also be configured to establish a lateral or horizontal flow of water W through the filter chamber 5.

## Claims

1. A filter apparatus (1) for mechanically filtering a liquid (W), the filter apparatus (1) comprising:
a filter chamber (5) containing a plurality of filter elements (7) for filtering the liquid (W), the filter elements (7) each having an open cell structure; and
a steriliser unit (36) disposed inside the filter chamber (5) for sterilising the filter elements (7) in the filter chamber (5);
wherein, in use, the liquid (W) flows through the filter chamber (5) and causes the filter elements (7) to form a filter pack (29) in the filter chamber (5), the steriliser unit (36) being located inside the filter chamber (5) such that the filter elements (7) form the filter pack (29) around at least a portion of the steriliser unit (36), the steriliser unit (36) being configured to extend at least partially into the filter pack (29) formed in the filter chamber (5) .

2. A filter apparatus 1 as claimed in claim 1, wherein, in use, the flow of the liquid (W) through the filter chamber (5) is an up flow resulting in the filter pack (29) forming in an upper region of the filter chamber (5); the steriliser unit (36) being disposed proximal to the upper region of the filter chamber.

3. A filter apparatus 1 as claimed in claim 1, wherein, in use, the flow of the liquid (W) through the filter chamber (5) is a down flow resulting in the filter pack (29) forming in a lower region of the filter chamber (5); the steriliser unit being disposed proximal to the lower region of the filter chamber (5).

4. A filter apparatus (1) as claimed in any one of the preceding claims, wherein the filter chamber (5) comprises a liquid inlet (12) and a liquid outlet (14), the steriliser unit (36) being disposed proximal to the liquid outlet (14).

5. A filter apparatus (1) as claimed in any one of the preceding claims, wherein the steriliser unit (36) comprises at least one light source (37) for emitting UV light.

6. A filter apparatus (1) as claimed in claim 5, wherein the at least one light source (37) is configured predominantly to emit light having a wavelength of between 100nm and 280nm inclusive.

7. A filter apparatus (1) as claimed in claim 5 or claim 6 comprising means for reflecting light emitted from the at least one light source (37) into the filter chamber (5).

8. A filter apparatus (1) as claimed in any one of the preceding claims, wherein the filter elements (7) each comprise one or more filter cells.

9. A filter apparatus (1) as claimed in any one of the preceding claims, wherein the filter apparatus comprises means for introducing air into the filter chamber (5) through one or more air inlets (25) to agitate the filter elements (7).

10. A filter apparatus (1) as claimed in any one of the preceding claims comprising a control unit for controlling activation of the steriliser unit (36); the control unit being configured to control activation of a pump (3) for suppling liquid (W) to the filter chamber (5); the control unit being configured to activate the steriliser unit (36) when the pump (3) is operating.

11. A method of filtering a liquid (W), the method comprising:
establishing a flow of liquid (W) through a filter pack (29) formed of a plurality of filter elements (7) in a filter chamber (5), the filter elements (7) each having an open cell structure, the flow of liquid (W) through the filter chamber (5) causing the filter elements (7) to form the filter pack (29) in the filter chamber (5), and
sterilising the filter elements (7) in the filter chamber (5) while the liquid (W) flows through the filter pack (29),
wherein the method comprises activating a steriliser unit (36) to sterilise the filter elements (7) in the filter chamber (5), the steriliser unit (36) being located inside the filter chamber (5) such that the filter elements (7) form the filter pack (29) around at least a portion of the steriliser unit (36), the steriliser unit (36) being configured to extend at least partially into the filter pack (29) formed in the filter chamber (5).

12. A method as claimed in claim 11, wherein sterilising the filter elements (7) comprises emitting light which is incident on the filter elements (7) in the filter chamber (5); wherein the light emitted into the filter chamber (5) has a wavelength of between 100nm and 280nm inclusive.

13. A method as claimed in claim 11 or claim 12, wherein the flow of liquid (W) through the filter chamber (5) is performed concurrent with sterilisation of the filter elements (7).

14. A method as claimed in claim 11, wherein the flow of the liquid (W) through the filter chamber (5) is an up flow resulting in the filter pack (29) forming in an upper region of the filter chamber (5); the steriliser unit (36) being disposed proximal to the upper region of the filter chamber.

15. A method as claimed in claim 11, wherein the flow of the liquid (W) through the filter is a down flow resulting in the filter pack (29) forming in a lower region of the filter chamber (5); the steriliser unit being disposed proximal to the lower region of the filter chamber (5).

## Patentansprüche

1. Filtervorrichtung (1) zum mechanischen Filtern einer Flüssigkeit (W), wobei die Filtervorrichtung (1) Folgendes umfasst:
eine Filterkammer (5), die eine Vielzahl von Filterelementen (7) zum Filtern der Flüssigkeit (W) enthält, wobei die Filterelemente (7) jeweils eine offene Zellstruktur aufweisen; und
eine Sterilisiereinheit (36), die in der Filterkammer (5) angeordnet ist, um die Filterelemente (7) in der Filterkammer (5) zu sterilisieren;
wobei die Flüssigkeit (W) bei der Verwendung durch die Filterkammer (5) fließt und bewirkt, dass die Filterelemente (7) in der Filterkammer (5) ein Filterpaket (29) bilden, wobei die Sterilisiereinheit (36) so in der Filterkammer (5) angeordnet ist, dass die Filterelemente (7) das Filterpaket (29) um mindestens einen Abschnitt der Sterilisiereinheit (36) herum bilden, wobei die Sterilisiereinheit (36) konfiguriert ist, um sich mindestens teilweise in das in der Filterkammer (5) gebildete Filterpaket (29) zu erstrecken.

2. Filtervorrichtung 1 nach Anspruch 1, wobei bei Verwendung der Fluss der Flüssigkeit (W) durch die Filterkammer (5) ein Aufwärtsfluss ist, was dazu führt, dass sich das Filterpaket (29) in einem oberen Bereich der Filterkammer (5) bildet; wobei die Sterilisiereinheit (36) proximal zum oberen Bereich der Filterkammer angeordnet ist.

3. Filtervorrichtung (1) nach Anspruch 1, wobei bei Verwendung der Fluss der Flüssigkeit (W) durch die Filterkammer (5) ein Abwärtsfluss ist, was dazu führt, dass sich das Filterpaket (29) in einem unteren Bereich der Filterkammer (5) bildet; wobei die Sterilisiereinheit proximal zum unteren Bereich der Filterkammer (5) angeordnet ist.

4. Filtervorrichtung (1) nach einem der vorhergehenden Ansprüche, wobei die Filterkammer (5) einen Flüssigkeitseinlass (12) und einen Flüssigkeitsauslass (14) umfasst, wobei die Sterilisiereinheit (36) proximal zum Flüssigkeitsauslasses (14) angeordnet ist.

5. Filtervorrichtung (1) nach einem der vorhergehenden Ansprüche, wobei die Sterilisiereinheit (36) mindestens eine Lichtquelle (37) zum Emittieren von UV-Licht umfasst.

6. Filtervorrichtung (1) nach Anspruch 5, wobei die mindestens eine Lichtquelle (37) vorwiegend so konfiguriert ist, dass sie Licht mit einer Wellenlänge zwischen 100 nm und einschließlich 280 nm emittiert.

7. Filtervorrichtung (1) nach Anspruch 5 oder 6, umfassend Mittel zum Reflektieren von Licht, das von der mindestens einen Lichtquelle (37) emittiert wird, in die Filterkammer (5).

8. Filtervorrichtung (1) nach einem der vorhergehenden Ansprüche, wobei die Filterelemente (7) jeweils eine oder mehrere Filterzellen umfassen.

9. Filtervorrichtung (1) nach einem der vorhergehenden Ansprüche, wobei die Filtervorrichtung Mittel zum Einleiten von Luft in die Filterkammer (5) durch einen oder mehrere Lufteinlässe (25) umfasst, um die Filterelemente (7) zu bewegen.

10. Filtervorrichtung (1) nach einem der vorhergehenden Ansprüche, umfassend eine Steuereinheit zum Steuern der Aktivierung der Sterilisiereinheit (36); wobei die Steuereinheit konfiguriert ist, um die Aktivierung einer Pumpe (3) zum Zuführen von Flüssigkeit (W) zur Filterkammer (5) zu steuern; wobei die Steuereinheit konfiguriert ist, um die Sterilisiereinheit (36) zu aktivieren, wenn die Pumpe (3) in Betrieb ist.

11. Verfahren zum Filtern einer Flüssigkeit (W), wobei das Verfahren Folgendes umfasst:
Erzeugen eines Flusses von Flüssigkeit (W) durch ein Filterpaket (29), das aus einer Vielzahl von Filterelementen (7) in einer Filterkammer (5) gebildet ist, wobei die Filterelemente (7) jeweils eine offene Zellstruktur aufweisen, wobei der Fluss der Flüssigkeit (W) durch die Filterkammer (5) bewirkt, dass die Filterelemente (7) in der Filterkammer (5) das Filterpaket (29) bilden, und
Sterilisieren der Filterelemente (7) in der Filterkammer (5), während die Flüssigkeit (W) durch das Filterpaket (29) fließt,
wobei das Verfahren das Aktivieren einer Sterilisiereinheit (36) umfasst, um die Filterelemente (7) in der Filterkammer (5) zu sterilisieren, wobei die Sterilisiereinheit (36) innerhalb der Filterkammer (5) angeordnet ist, so dass die Filterelemente (7) das Filterpaket (29) um mindestens einen Abschnitt der Sterilisiereinheit (36) herum bilden, wobei die Sterilisiereinheit (36) konfiguriert ist, um sich mindestens teilweise in das in der Filterkammer (5) gebildete Filterpaket (29) zu erstrecken.

12. Verfahren nach Anspruch 11, wobei das Sterilisieren der Filterelemente (7) das Emittieren von Licht umfasst, das auf die Filterelemente (7) in der Filterkammer (5) einfällt; wobei das in die Filterkammer (5) emittierte Licht eine Wellenlänge zwischen 100 nm und einschließlich 280 nm aufweist.

13. Verfahren nach Anspruch 11 oder 12, wobei der Fluss der Flüssigkeit (W) durch die Filterkammer (5) gleichzeitig mit der Sterilisation der Filterelemente (7) erfolgt.

14. Verfahren nach Anspruch 11, wobei der Fluss der Flüssigkeit (W) durch die Filterkammer (5) ein Aufwärtsfluss ist, was dazu führt, dass sich das Filterpaket (29) in einem oberen Bereich der Filterkammer (5) bildet; wobei die Sterilisiereinheit (36) proximal zum oberen Bereich der Filterkammer angeordnet ist.

15. Verfahren nach Anspruch 11, wobei der Fluss der Flüssigkeit (W) durch den Filter ein Abwärtsfluss ist, was dazu führt, dass sich das Filterpaket (29) in einem unteren Bereich der Filterkammer (5) bildet; wobei die Sterilisiereinheit proximal zum unteren Bereich der Filterkammer (5) angeordnet ist.

## Revendications

1. Appareil de filtration (1) pour filtrer mécaniquement un liquide (W), l'appareil de filtration (1) comprenant :
une chambre de filtration (5) contenant une pluralité d'éléments de filtration (7) pour filtrer le liquide (W), les éléments de filtration (7) ayant chacun une structure à cellules ouvertes ; et
une unité de stérilisation (36) disposée à l'intérieur de la chambre de filtration (5) pour stériliser les éléments de filtration (7) dans la chambre de filtration (5) ;
dans lequel, lors de l'utilisation, le liquide (W) s'écoule à travers la chambre de filtration (5) et amène les éléments de filtration (7) à former un paquet de filtration (29) dans la chambre de filtration (5), l'unité de stérilisation (36) étant située à l'intérieur de la chambre de filtration (5) de sorte que les éléments de filtration (7) forment le paquet de filtration (29) autour d'au moins une portion de l'unité de stérilisation (36), l'unité de stérilisation (36) étant configurée pour s'étendre au moins partiellement dans le paquet de filtration (29) formé dans la chambre de filtration (5).

2. Appareil de filtration (1) selon la revendication 1, dans lequel, lors de l'utilisation, l'écoulement du liquide (W) à travers la chambre de filtration (5) est un écoulement ascendant qui entraîne la formation du paquet de filtration (29) dans une région supérieure de la chambre de filtration (5) ; l'unité de stérilisation (36) étant disposée à proximité de la région supérieure de la chambre de filtration.

3. Appareil de filtration (1) selon la revendication 1, dans lequel, lors de l'utilisation, l'écoulement du liquide (W) à travers la chambre de filtration (5) est un écoulement descendant qui entraîne la formation du paquet de filtration (29) dans une région inférieure de la chambre de filtration (5) ; l'unité de stérilisation étant disposée à proximité de la région inférieure de la chambre de filtration (5).

4. Appareil de filtration (1) selon l'une quelconque des revendications précédentes, dans lequel la chambre de filtration (5) comprend une entrée de liquide (12) et une sortie de liquide (14), l'unité de stérilisation (36) étant disposée à proximité de la sortie de liquide (14).

5. Appareil de filtration (1) selon l'une quelconque des revendications précédentes, dans lequel l'unité de stérilisation (36) comprend au moins une source de lumière (37) pour émettre une lumière UV.

6. Appareil de filtration (1) selon la revendication 5, dans lequel l'au moins une source de lumière (37) est configurée principalement pour émettre une lumière ayant une longueur d'onde comprise entre 100 nm et 280 nm inclus.

7. Appareil de filtration (1) selon la revendication 5 ou la revendication 6 comprenant des moyens pour réfléchir la lumière émise à partir de l'au moins une source de lumière (37) dans la chambre de filtration (5).

8. Appareil de filtration (1) selon l'une quelconque des revendications précédentes, dans lequel les éléments de filtration (7) comprennent chacun une ou plusieurs cellules de filtration.

9. Appareil de filtration (1) selon l'une quelconque des revendications précédentes, dans lequel l'appareil de filtration comprend des moyens pour introduire de l'air dans la chambre de filtration (5) à travers une ou plusieurs entrées d'air (25) pour agiter les éléments de filtration (7).

10. Appareil de filtration (1) selon l'une quelconque des revendications précédentes comprenant une unité de commande pour commander l'activation de l'unité de stérilisation (36) ; l'unité de commande étant configurée pour commander l'activation d'une pompe (3) pour alimenter en liquide (W) la chambre de filtration (5) ; l'unité de commande étant configurée pour activer l'unité de stérilisation (36) lorsque la pompe (3) est en fonctionnement.

11. Procédé de filtration d'un liquide (W), le procédé comprenant :
l'établissement d'un écoulement de liquide (W) à travers un paquet de filtration (29) formé d'une pluralité d'éléments de filtration (7) dans une chambre de filtration (5), les éléments de filtration (7) ayant chacun une structure à cellules ouvertes, l'écoulement de liquide (W) à travers la chambre de filtration (5) amenant les éléments de filtration (7) à former le paquet de filtration (29) dans la chambre de filtration (5), et
la stérilisation des éléments de filtration (7) au sein de la chambre de filtration (5) pendant que le liquide (W) s'écoule à travers le paquet de filtration (29),
dans lequel le procédé comprend l'activation d'une unité de stérilisation (36) pour stériliser les éléments de filtration (7) dans la chambre de filtration (5), l'unité de stérilisation (36) étant située à l'intérieur de la chambre de filtration (5) de sorte que les éléments de filtration (7) forment le paquet de filtration (29) autour d'au moins une portion de l'unité de stérilisation (36), l'unité de stérilisation (36) étant configurée pour s'étendre au moins partiellement dans le paquet de filtration (29) formé dans la chambre de filtration (5).

12. Procédé selon la revendication 11, dans lequel la stérilisation des éléments de filtration (7) comprend l'émission d'une lumière qui est incidente sur les éléments de filtration (7) dans la chambre de filtration (5) ;
dans lequel la lumière émise dans la chambre de filtration (5) a une longueur d'onde comprise entre 100 nm et 280 nm inclus.

13. Procédé selon la revendication 11 ou la revendication 12, dans lequel l'écoulement de liquide (W) à travers la chambre de filtration (5) est effectué en même temps que la stérilisation des éléments de filtration (7).

14. Procédé selon la revendication 11, dans lequel l'écoulement du liquide (W) à travers la chambre de filtration (5) est un écoulement ascendant qui entraîne la formation du paquet de filtration (29) dans une région supérieure de la chambre de filtration (5) ; l'unité de stérilisation (36) étant disposée à proximité de la région supérieure de la chambre de filtration.

15. Procédé selon la revendication 11, dans lequel l'écoulement du liquide (W) à travers le filtre est un écoulement descendant qui entraîne la formation du paquet de filtration (29) dans une région inférieure de la chambre de filtration (5) ; l'unité de stérilisation étant disposée à proximité de la région inférieure de la chambre de filtration (5).
